# EUROPEAN PATENT APPLICATION

(11) **EP 3 057 314 A1**
(43) Date of publication of application: **17.08.2016**
(21) Application number: 15819617.0
(22) Date of filing: 12.02.2015
(51) Int. Cl.: H04N 7/15, H04L 12/18, G06K 9/78

(54) **METHOD, DEVICE AND SYSTEM FOR MULTIPOINT VIDEO COMMUNICATIONS**

(30) Priority: 08.07.2014 CN 201410322999
(71) Applicant: Huawei Technologies Co. Ltd., Shenzhen, Guangdong 518129 (CN)
(72) Inventor: GE, Peng, Shenzhen Guangdong 518129 (CN); DONG, Jianming, Shenzhen Guangdong 518129 (CN); SUN, Zhe, Shenzhen Guangdong 518129 (CN)
(74) Representative: Pfenning, Meinig & Partner mbB
(86) International application number: PCT/CN2015/072902
(87) International publication number: WO 2016/004765

(57) **Abstract**

The present invention discloses a method, device, and system for multipoint video communication. The method includes: determining whether an image acquisition target exists in an image acquisition area within a current period; and if the image acquisition target is absent from the image acquisition area within the current period, skipping reporting image information of the image acquisition area within the current period to a multipoint control unit. The method, device, and system for multipoint video communication disclosed by the present invention can implement that an image acquisition target always exists in an image corresponding to the image information reported to the multipoint control unit, which avoids a waste of system resources caused by absence of an image acquisition target from an image corresponding to image information reported to the multipoint control unit, thereby saving the system resources, reducing load of the multipoint control unit, and improving overall performance of the system for multipoint video communication.

## Description

### CROSS-REFERENCE TO RELATED APPLICATIONS

This application claims priority to Chinese Patent Application No. 201410322999.1, filed with the Chinese Patent Office on July 8, 2014, and entitled "METHOD, DEVICE, AND SYSTEM FOR MULTIPOINT VIDEO COMMUNICATION", which is incorporated herein by reference in its entirety.

### TECHNICAL FIELD

Embodiments of the present invention relate to the communications field, and more specifically, to a method, device, and system for multipoint video communication.

### BACKGROUND

Multipoint video communication is a communication manner in which users located in different places hold a conference by using a TV and/or a phone to transfer sound and/or an image in real time. The multipoint video communication may further additionally support transfer of signals of a static image, a document, a fax, and the like. By using the TV and/or the phone, the users performing the multipoint video communication may air their opinions, and meanwhile observe images, actions, facial expressions, and the like of others, and may present a physical object, a drawing, or a file, or display a character or a figure on a blackboard or a whiteboard in real time, so that the users participating in the multipoint video communication in different places deem that they are talking with the others as if they were in the same place as the others. Therefore, the multipoint video communication may serve as a substitute for on-site communication.

In the prior art, users participating in multipoint video communication are distributed at different endpoints; each endpoint device transfers shot images as they really are to a multipoint control unit (Multipoint Control Unit, MCU), and then the multipoint control unit processes and distributes the shot images to another endpoint. However, because each endpoint device does not distinguish, according to usefulness, image content uploaded by each endpoint device to the multipoint control unit, the endpoint device often uploads a useless image to the multipoint control unit, which results in a waste of transmission resources and a waste of resources of the multipoint control unit; in addition, image display by another endpoint device causes a drawback to user experience.

### SUMMARY

The present invention provides a method, device, and system for multipoint video communication, so that an image acquisition target always exists in an image corresponding to image information reported to a multipoint control unit, which avoids a waste of system resources caused by absence of an image acquisition target from an image corresponding to image information reported to the multipoint control unit.

According to a first aspect, a method for multipoint video communication is provided, including: determining whether an image acquisition target exists in an image acquisition area within a current period; and if the image acquisition target is absent from the image acquisition area within the current period, skipping reporting image information of the image acquisition area within the current period to a multipoint control unit.

In a first possible implementation manner, the determining whether an image acquisition target exists in an image acquisition area within a current period includes: performing detection in the image acquisition area within the current period, where a detection target of the detection includes at least one of the following: a biometric feature and a sensing card, where the sensing card stores identification information of an image acquisition target corresponding to the sensing card; if the detection target is not detected in the image acquisition area within the current period, determining that the image acquisition target is absent from the image acquisition area within the current period; and if the detection target is detected in the image acquisition area within the current period, determining that the image acquisition target exists in the image acquisition area within the current period.

With reference to the foregoing possible implementation manners, in a second possible implementation manner, the method further includes: if the image acquisition target exists in the image acquisition area within the current period, acquiring the image information of the image acquisition area within the current period; and reporting the acquired image information of the image acquisition area within the current period to the multipoint control unit.

With reference to the foregoing possible implementation manners, in a third possible implementation manner, the image acquisition target includes a person, and the method further includes: if a person exists in the image acquisition area within the current period, determining personal information of the person; and reporting the personal information of the person to the multipoint control unit, so that the multipoint control unit determines an identity of the person according to the personal information of the person.

With reference to the foregoing possible implementation manner, in a fourth possible implementation manner, the personal information includes at least one of the following information: biometric feature information and identity information.

With reference to the foregoing possible implementation manners, in a fifth possible implementation manner, the determining personal information of the person includes: obtaining information stored in a sensing card corresponding to the person, where the information stored in the sensing card is used to identify the person; and determining the personal information of the person according to the information stored in the sensing card.

With reference to the foregoing possible implementation manners, in a sixth possible implementation manner, the personal information includes the identity information, and the determining personal information of the person includes: obtaining biometric feature information of the person; and determining identity information of the person according to the biometric feature information and a personal information database.

With reference to the foregoing possible implementation manners, in a seventh possible implementation manner, before the sending the personal information to the multipoint control unit, the method further includes: adding a label to the personal information, where a correspondence exists between the label and the acquired image information of the image acquisition area within the current period; and the sending the personal information to the multipoint control unit includes: sending, to the multipoint control unit, the personal information to which the label is added, so that the multipoint control unit matches the personal information with the image information according to the correspondence between the label and the acquired image information of the image acquisition area within the current period.

With reference to the foregoing possible implementation manners, in an eighth possible implementation manner, the method further includes: if the image acquisition target is absent from the image acquisition area within the current period, skipping acquiring the image information of the image acquisition area within the current period.

According to a second aspect, a device for multipoint video communication is provided, including: a determining module, configured to determine whether an image acquisition target exists in an image acquisition area within a current period; and a sending module, configured to: if the determining module determines that the image acquisition target is absent from the image acquisition area within the current period, skip reporting image information of the image acquisition area within the current period to a multipoint control unit.

In a first possible implementation manner, the determining module includes: a detecting unit, configured to perform detection in the image acquisition area within the current period, where a detection target of the detection includes at least one of the following: a biometric feature and a sensing card, where the sensing card stores identification information of an image acquisition target corresponding to the sensing card; and a determining unit, configured to: if no detection target is detected in the image acquisition area by the detecting unit within the current period, determine that the image acquisition target is absent from the image acquisition area within the current period; and if at least one detection target is detected in the image acquisition area by the detecting unit within the current period, determine that the image acquisition target exists in the image acquisition area within the current period.

With reference to the foregoing possible implementation manners, in a second possible implementation manner, the device further includes an image acquiring module, configured to: if the determining module determines that the image acquisition target exists in the image acquisition area within the current period, acquire the image information of the image acquisition area within the current period; and the sending module is specifically configured to report the image information, acquired by the image acquiring module, of the image acquisition area within the current period to the multipoint control unit.

With reference to the foregoing possible implementation manners, in a third possible implementation manner, the image acquisition target includes a person; the determining module is further configured to: if a person exists in the image acquisition area within the current period, determine personal information of the person; and the sending module is further configured to report the personal information, determined by the determining module, of the person to the multipoint control unit, so that the multipoint control unit determines an identity of the person according to the personal information of the person.

With reference to the foregoing possible implementation manner, in a fourth possible implementation manner, the personal information includes at least one of the following information: biometric feature information and identity information.

With reference to the foregoing possible implementation manners, in a fifth possible implementation manner, the determining module is specifically configured to: obtain information stored in a sensing card corresponding to the person, where the information stored in the sensing card is used to identify the person; and determine the personal information of the person according to the information stored in the sensing card.

With reference to the foregoing possible implementation manners, in a sixth possible implementation manner, the personal information includes the identity information, and the determining module is specifically configured to: obtain biometric feature information of the person, and determine identity information of the person according to the biometric feature information and a personal information database.

With reference to the foregoing possible implementation manners, in a seventh possible implementation manner, the determining module is further configured to: add a label to the personal information before the sending module reports the personal information to the multipoint control unit, where a correspondence exists between the label and the acquired image information of the image acquisition area within the current period; and the sending module is specifically configured to send, to the multipoint control unit, the personal information to which the label is added by the determining module, so that the multipoint control unit matches the personal information with the image information according to the correspondence between the label and the acquired image information of the image acquisition area within the current period.

With reference to the foregoing possible implementation manner, in an eighth possible implementation manner, the image acquiring module is further configured to: if the determining module determines that the image acquisition target is absent from the image acquisition area within the current period, skip acquiring the image information of the image acquisition area within the current period.

According to a third aspect, a system for multipoint video communication is provided, including multiple endpoint devices and a multipoint control unit, where: each endpoint device of the multiple endpoint devices corresponds to at least one image acquisition area; and a first endpoint device of the multiple endpoint devices is configured to determine whether an image acquisition target exists in at least one image acquisition area corresponding to the first endpoint device within a current period, and if the image acquisition target is absent from a first image acquisition area of the at least one image acquisition area within the current period, skip reporting image information of the first image acquisition area within the current period to the multipoint control unit.

In a first possible implementation manner, the first endpoint device is further configured to: if it is determined that the image acquisition target exists in the first image acquisition area within the current period, acquire the image information of the first image acquisition area within the current period, and report the acquired image information of the first image acquisition area within the current period to the multipoint control unit; and the multipoint control unit is configured to receive the image information sent by the first endpoint device, and send the image information to a second endpoint device.

With reference to the foregoing possible implementation manner, in a second possible implementation manner, the image acquisition target includes a person; the first endpoint device is further configured to: if it is determined that a person exists in the first image acquisition area within the current period, determine personal information of the person, and send the personal information of the person to the multipoint control unit; and the multipoint control unit is further configured to receive the personal information sent by the first endpoint device, determine identity information of the person corresponding to the personal information, and send the identity information of the person to the second endpoint device.

With reference to the foregoing possible implementation manner, in a third possible implementation manner, the personal information includes biometric feature information; and the multipoint control unit is specifically configured to determine the identity information of the person corresponding to the biometric feature information according to the received biometric feature information and a personal information database.

According to a fourth aspect, a device for multipoint video communication is provided, including N sensors and a sender, where each sensor of the N sensors corresponds to one image acquisition area; a first sensor of the N sensors is configured to determine whether an image acquisition target exists in a first image acquisition area corresponding to the first sensor within a current period; and the sender is configured to: if the first sensor determines that the image acquisition target is absent from the first image acquisition area within the current period, skip reporting image information of the first image acquisition area within the current period to a multipoint control unit.

In a first possible implementation manner, the device further includes M cameras, where 1 ≤ N ≤ M, and the first sensor corresponds to at least one first camera of the M cameras, where: the at least one first camera is configured to: if the first sensor determines that the image acquisition target exists in the first image acquisition area within the current period, acquire the image information of the first image acquisition area within the current period; and the sender is further configured to report the image information, acquired by the at least one first camera, of the first image acquisition area within the current period to the multipoint control unit.

With reference to the foregoing possible implementation manners, in a second possible implementation manner, the image acquisition target includes a person, and the device further includes a processor, configured to: if the first sensor determines that a person exists in the first image acquisition area within the current period, determine personal information of the person; and the sender is further configured to report the personal information, determined by the processor, of the person to the multipoint control unit, so that the multipoint control unit determines an identity of the person according to the personal information of the person.

With reference to the foregoing possible implementation manner, in a third possible implementation manner, the at least one first camera is further configured to: if the first sensor determines that an image acquisition target exists in the first image acquisition area within the current period, skip acquiring the image information of the first image acquisition area within the current period.

Based on the foregoing technical solutions, according to the method, device, and system for multipoint video communication provided in the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of the system for multipoint video communication.

### BRIEF DESCRIPTION OF DRAWINGS

To describe the technical solutions in the embodiments of the present invention more clearly, the following briefly introduces the accompanying drawings required for describing the embodiments of the present invention or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario example according to an embodiment of the present invention;
FIG. 2 is a schematic flowchart of a method for multipoint video communication according to an embodiment of the present invention;
FIG. 3 is a schematic flowchart of a method for multipoint video communication according to another embodiment of the present invention;
FIG. 4 is a schematic flowchart of a method for multipoint video communication according to still another embodiment of the present invention;
FIG. 5 is a schematic block diagram of a device for multipoint video communication according to an embodiment of the present invention;
FIG. 6 is a schematic block diagram of a device for multipoint video communication according to another embodiment of the present invention; and
FIG. 7 shows an example of a device for multipoint video communication according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

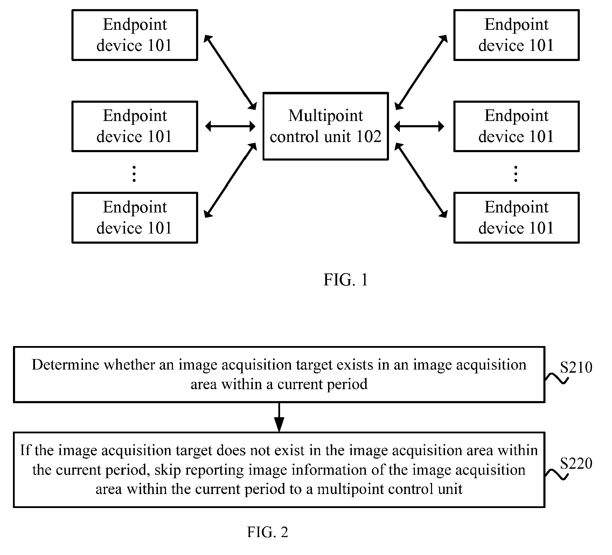

FIG. 1 is a schematic diagram of an application scenario example according to an embodiment of the present invention. As shown in FIG. 1, a system 100 for multipoint video communication includes multiple endpoint devices 101 and a multipoint control unit 102, where each endpoint device 101 of the multiple endpoint devices 101 may include a camera and a sender, the camera is used to acquire image information of an image acquisition area corresponding to the camera, and the sender is used to send the image information acquired by the camera to the multipoint control unit 102. Correspondingly, the multipoint control unit 102 receives image information sent by each endpoint device of the multiple endpoint devices 101, and sends, to another endpoint device 101, received image information that is sent by one endpoint device 101. The another endpoint device 101 receives the image information sent by the multipoint control unit 102, and may present the image information by using a display of the endpoint device 101.

In this embodiment of the present invention, the multiple endpoint devices 101 may be at different geographical locations or have different network addresses, such as multiple endpoint devices placed in different conference rooms. For ease of description, FIG. 1 shows four endpoint devices, that is, an endpoint device 1, an endpoint device 2, an endpoint device 3, and an endpoint device 4. However, a quantity of endpoint devices is not limited in this embodiment of the present invention. In addition, an implementation form of the endpoint device 101 is also not limited in this embodiment of the present invention. For example, the endpoint device may be a hand-held mobile device or a fixedly disposed device, and the endpoint device may provide a sound and image acquisition function, a display function, and a function of interacting with an MCU. However, this embodiment of the present invention is not limited thereto.

In the prior art, when the multiple endpoint devices 101 are in an enabled state, the multiple endpoint devices 101 keep acquiring image information and sending the acquired image information to the multipoint control unit 102. In this process, the image information reported by the endpoint devices 101 to the multipoint control unit 102 may correspond to a useless image. For example, an image corresponding to the acquired image information shows only a background without an image acquisition target. This may result in a waste of transmission resources and resources of the multipoint control unit 102, and increase load of the multipoint control unit 102, thereby reducing overall performance of the system 100 for multipoint video communication.

FIG. 2 is a schematic flowchart of a method 200 for multipoint video communication according to an embodiment of the present invention. The method 200 may be executed by a device (for example, an endpoint device 101 shown in FIG. 1) for multipoint video communication.

S210. Determine whether an image acquisition target exists in an image acquisition area within a current period.

The image acquisition target may be preset or be determined according to a user instruction. The image acquisition target may include one or more targets, such as a person, a projection screen of a projector, a computer screen, various paper media, and pictures, and this embodiment of the present invention sets no limit thereto.

Duration of the current period may be preset or be determined according to a user instruction. For example, the duration of the current period may equal zero, that is, the current period is specifically a current moment, or the duration of the current period may be several or tens of seconds (for example, 10 seconds). The embodiment of the present invention sets no limit thereto.

S220. If the image acquisition target is absent from the image acquisition area within the current period, skip reporting image information of the image acquisition area within the current period to a multipoint control unit.

If the image acquisition target is absent from the current image acquisition area, the device for multipoint video communication skips reporting the image information of the current image acquisition area to the multipoint control unit. Specifically, the device for multipoint video communication may acquire the image information of the image acquisition area within the current period, but does not report the acquired image information to the multipoint control unit; or the device for multipoint video communication may not acquire the image information of the image acquisition area within the current period, and does not report the image information of the image acquisition area within the current period to the device for multipoint video communication. The embodiment of the present invention sets no limit thereto.

Therefore, according to the method for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

Optionally, as another embodiment, the method 200 further includes:
if the image acquisition target exists in the image acquisition area within the current period, acquiring the image information of the image acquisition area within the current period; and
reporting the acquired image information of the image acquisition area within the current period to the multipoint control unit.

In the embodiment of the present invention, the device for multipoint video communication may correspond to one or more image acquisition areas. Optionally, if the device for multipoint video communication corresponds to multiple image acquisition areas, the device for multipoint video communication may determine whether an image acquisition target exists in a first image acquisition area of the multiple image acquisition areas within a current period in S210; and if the image acquisition target is absent from the first image acquisition area within the current period, the device for multipoint video communication skips reporting image information of the first image acquisition area within the current period to the multipoint control unit in S220. Optionally, as another embodiment, the device for multipoint video communication may also determine whether an image acquisition target exists in a second image acquisition area of the multiple image acquisition areas in S210; and if the image acquisition target exists in the second image acquisition area of the multiple image acquisition areas within the current period, the device for multipoint video communication may acquire image information of the second image acquisition area within the current period, and report the acquired image information to the multipoint control unit in S220. However, this embodiment of the present invention is not limited thereto.

In S210, the device for multipoint video communication may determine, in multiple manners, whether the image acquisition target exists in the image acquisition area within the current period. Optionally, the determining whether an image acquisition target exists in an image acquisition area within a current period in S210 includes:
performing detection in the image acquisition area within the current period, where a detection target of the detection includes at least one of the following: a biometric feature and a sensing card, where the sensing card stores identification information of an image acquisition target corresponding to the sensing card;
if the detection target is not detected in the image acquisition area within the current period, determining that the image acquisition target is absent from the image acquisition area within the current period; and
if the detection target is detected in the image acquisition area within the current period, determining that the image acquisition target exists in the image acquisition area within the current period.

Existence of the detection target may indicate existence of the image acquisition target. The detection target may be same as the image acquisition target, or the detection target is an accessary to the image acquisition target; however, this embodiment of the present invention is not limited thereto. In an example in which the image acquisition target includes a person, the detection target may include a biometric feature and/or a sensing card, where the sensing card stores identification information (such as a name, working place, or post) of an owner of the sensing card, and the sensing card may be an IC card, a magnetic card, or the like. The embodiment of the present invention sets no limit to either content included in the detection target or a specific implementation of the content.

Specifically, the device for multipoint video communication may detect, by using a sensing technology, existence of the sensing card in the image acquisition area. For example, the sensing technology is a near field communication (NFC) technology; however, the embodiment of the present invention is not limited thereto. In addition, the biometric feature may include a human face, sound, a fingerprint, an iris, a retina, handwriting, or the like. Correspondingly, the device for multipoint video communication may detect, by using a biometric feature recognition technology corresponding to one biometric feature, existence of the biometric feature in the image acquisition area. For example, the biometric feature recognition technology may include a human face recognition technology, a speaker recognition technology, a fingerprint recognition technology, an iris recognition technology, a retina recognition technology, a signature recognition technology, or the like, which is not limited in this embodiment of the present invention.

Optionally, the device for multipoint video communication may keep performing the detection starting from an initial moment of the current period until existence of the detection target is detected or the current period expires, or the device for multipoint video communication may perform detection on the image acquisition area only at an initial moment of the current period to determine whether the detection target exists in the image acquisition area within the current period. This embodiment of the present invention sets no limit thereto. If the device for multipoint video communication does not detect any detection target within the current period, the device for multipoint video communication determines that the image acquisition target is absent from the image acquisition area within the current period; if the device for multipoint video communication detects at least one detection target within the current period, for example, detects existence of a person and/or a sensing card, the device for multipoint video communication determines that the image acquisition target does not exist in the image acquisition area within the current period. However, this embodiment of the present invention is not limited thereto.

Optionally, as another embodiment, if the image acquisition target includes a person, the method 200 further includes:
if a person exists in the image acquisition area within the current period, determining personal information of the person; and
reporting the personal information of the person to the multipoint control unit, so that the multipoint control unit determines an identity of the person according to the personal information of the person.

In this embodiment of the present invention, personal information of a person may include various information related to the person, for example, identity information (such as a name, post, and working place or department), biometric feature information (such as speech information, fingerprint information, signature information, and retina information), and personal experience information, which is not limited in this embodiment of the present invention.

In this embodiment of the present invention, the device for multipoint video communication may determine the personal information of the person in multiple manners. Optionally, if the detection target includes a sensing card, the device for multipoint video communication may determine the personal information of the person by obtaining information stored in a sensing card of the person. Correspondingly, the determining the personal information of the person includes: obtaining the information stored in the sensing card corresponding to the person, where the information stored in the sensing card is used to identify the person; and determining the personal information of the person according to the information stored in the sensing card. That is, information stored in a sensing card detected in the image acquisition area is obtained, and personal information of a person corresponding to the sensing card is determined according to the information. In this case, the person corresponding to the sensing card may be an owner of the sensing card or a holder of the sensing card, and the personal information may include identity information, which are not limited in this embodiment of the present invention.

Optionally, as another embodiment, if the detection target includes a biometric feature, the device for multipoint video communication may determine an identity of a person corresponding to the biometric feature according to the detected biometric feature and a personal information database. In this case, the personal information reported to the multipoint control unit includes identity information; and correspondingly, the determining the personal information of the person includes: obtaining biometric feature information of the person; and determining identity information of the person according to static image information and the personal information database.

Specifically, the device for multipoint video communication may input the biometric feature information of the person to the personal information database, so as to determine a person matching the biometric feature information and an identity of the person; however, this embodiment of the present invention is not limited thereto.

Optionally, as another embodiment, if the device for multipoint video communication cannot determine the identity of the person according to the biometric feature information of the person, the device for multipoint video communication may send the determined biometric feature information to the multipoint control unit, and the multipoint control unit determines the identity of the person corresponding to the biometric feature information according to the biometric feature information and a personal information database. For example, the device for multipoint video communication may obtain static image information (for example, by taking a picture) of the person, and send the static image information to the multipoint control unit; however, the embodiment of the present invention is not limited thereto. If the personal information reported by the device for multipoint video communication to the multipoint control unit includes identity information, the multipoint control unit may directly determine an identity corresponding to the identity information; however, the embodiment of the present invention is not limited thereto.

In this embodiment of the present invention, the device for multipoint video communication may send, to the multipoint control unit, the personal information of the person and the image information of the image acquisition area acquired within the current period separately or together. Optionally, before the sending the personal information to the multipoint control unit, the method further includes adding a label to the personal information, where a correspondence exists between the label and the acquired image information of the image acquisition area within the current period.

Correspondingly, the sending the personal information to the multipoint control unit includes: sending, to the multipoint control unit, the personal information to which the label is added, so that the multipoint control unit matches the personal information with the image information according to the correspondence between the label and the acquired image information of the image acquisition area within the current period.

As one optional embodiment, the device for multipoint video communication may add a label only to the personal information, where a correspondence exists between the label and the acquired image information of the image acquisition area, for example, the label includes an identifier of the image information, an identifier of an image acquisition area corresponding to the personal information, an identifier of a camera corresponding to the personal information, and the like. Optionally, as another embodiment, the device for multipoint video communication may also add a label to the personal information and the image information individually, where a label added to the personal information and a label added to the image information are the same or have a correspondence, so that the multipoint control unit may match the personal information with the image information according to the labels. However, this embodiment of the present invention is not limited thereto.

After matching the personal information with the image information, the multipoint control unit may determine identity information corresponding to the personal information, and send the identity information and the image information to another device (for example, another endpoint device) that performs video communication. The another device that performs video communication may present the identity information while displaying an image corresponding to the image information, so that a user learns more information, for example, a name, post, organizational relationship, regional characteristic, and the like, about a remote user when communicating with the remote user, thereby improving efficiency of remote communication and improving user experience. Optionally, as another embodiment, if multiple persons exist in the image acquisition area, the device for multipoint video communication may separately determine personal information of the multiple persons, and send personal information of each person of the multiple persons to the multipoint control unit. In this case, the another device that performs video communication may display identity information of each person of the multiple persons while presenting an image. Optionally, as another embodiment, the device for multipoint video communication may also determine an intersection set of personal information of the multiple persons, and send the determined intersection set of the personal information of the multiple persons to the multipoint control unit. For example, if determined personal information of persons in the image acquisition area includes "A-Research and development project manager-Research and development department-Shenzhen" and "B-Research and development engineer-Research and development department-Shenzhen", the device for multipoint video communication may report an intersection set "Research and development department-Shenzhen" of personal information of A and B to the multipoint control unit. In this case, the another device that performs video communication may display the intersection set of the personal information while presenting an image. However, the embodiment of the present invention is not limited thereto.

Optionally, as another embodiment, the method further includes: if the image acquisition target is absent from the image acquisition area within the current period, skipping acquiring the image information of the image acquisition area within the current period.

Therefore, according to the method for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

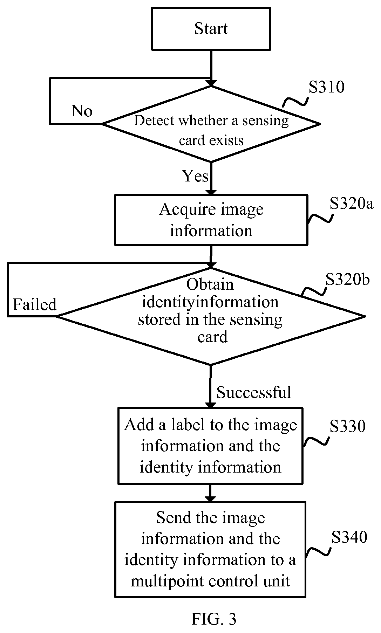

The following describes a method for video communication provided in an embodiment of the present invention in detail with reference to a specific example. FIG. 3 is a schematic flowchart of a method 300 for video communication according to another embodiment of the present invention. For ease of description, it is assumed that an image acquisition target includes a person; however, this embodiment of the present invention is not limited thereto. The method 300 is applicable to a scenario in which a device for video communication is not in an image acquiring state. For example, the device for video communication is just started or did not sense, within a previous period, existence of a person in an image acquisition area; however, this embodiment of the present invention is not limited thereto.

S310. Detect, by using a sensing technology, existence of a sensing card in an image acquisition area.

If existence of a sensing card is not detected in the image acquisition area, S310 is executed continuously; otherwise, S320a and S320b are executed.

S320a. Start to acquire image information of the image acquisition area.

S320b. Obtain identity information stored in the sensing card.

The identity information may include a name. Optionally, the identity information may further include a post, a working place, and the like. If the identity information is obtained successfully, S330 and S340 are executed; otherwise, S320b is executed continuously. Optionally, after failing to execute S320b, the device may send only the acquired image information to a multipoint control unit, and execute S320 again after a preset interval, where the preset interval may be several seconds or several minutes, which is not limited in this embodiment of the present invention.

S330. Add a label to the image information and the identity information.

S340. Send, to a multipoint control unit, the image information and the identity information to which the label is added.

Therefore, according to the method for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

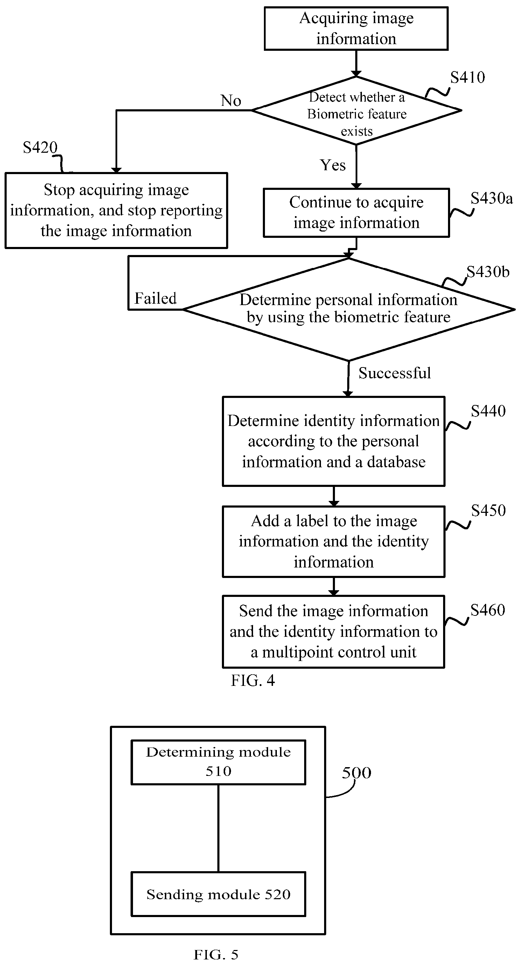

FIG. 4 is a schematic flowchart of a method 400 for video communication according to still another embodiment of the present invention. For ease of description, it is assumed that an image acquisition target includes a person; however, this embodiment of the present invention is not limited thereto. The method 400 is applicable to a scenario in which a device for video communication is in an image acquiring state.

S410. Detect, by using a biometric feature recognition technology, existence of a biometric feature in an image acquisition area.

If existence of a biometric feature is not detected in the image acquisition area, S420 is executed; otherwise, S430a and S430b are executed.

S420. Stop acquiring image information of the image acquisition area, and stop reporting the image information of the image acquisition area to a multipoint control unit.

S430a. Continue to acquire image information of the image acquisition area.

S430b. Determine, by using the detected biometric feature, personal information of a person corresponding to the biometric feature.

The personal information may include a static picture that is photographed immediately, an ID photo, or the like. If the personal information is successfully determined, S440, S450, and S460 are executed; otherwise, S430b is executed continuously. Optionally, after failing to execute S430b, the device may send only the acquired image information to the multipoint control unit, and execute S430b again after a preset interval, where the preset interval may be several seconds or several minutes, which is not limited in this embodiment of the present invention.

S440. Determine identity information of the person according to the personal information and a personal information database.

S450. Add a label to the image information and the identity information.

S460. Send, to the multipoint control unit, the image information and the identity information to which the label is added.

Therefore, according to the method for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

It should be noted that the two examples in FIG. 3 and FIG. 4 are provided to help a person skilled in the art better understand the embodiments of the present invention, but are not intended to limit the scope of the embodiments of the present invention. It is obvious that a person skilled in the art may make various equivalent modifications or changes according to the examples provided in FIG. 3 and FIG. 4, and such modifications or changes also fall within the scope of the embodiments of the present invention.

It should be understood that sequence numbers of the foregoing processes do not mean execution sequences. The execution sequences of the processes should be determined according to functions and internal logic of the processes, and should not be construed as any limitation on the implementation processes of the embodiments of the present invention.

The foregoing describes in detail the method for multipoint video communication according to the embodiments of the present invention with reference to FIG. 1 to FIG. 4, and the following describes in detail a device and system for multipoint video communication according to embodiments of the present invention with reference to FIG. 5 to FIG. 7.

FIG. 5 is a schematic block diagram of a device 500 for multipoint video communication according to an embodiment of the present invention. The device 500 includes:
a determining module 510, configured to determine whether an image acquisition target exists in an image acquisition area within a current period; and
a sending module 520, configured to: if the determining module 510 determines that the image acquisition target is absent from the image acquisition area within the current period, skip reporting image information of the image acquisition area within the current period to a multipoint control unit.

Therefore, according to the device for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

Optionally, the determining module 510 includes:
a detecting unit, configured to perform detection in the image acquisition area within the current period, where a detection target of the detection includes at least one of the following: a biometric feature and a sensing card, where the sensing card stores identification information of an image acquisition target corresponding to the sensing card; and
a determining unit, configured to: if no detection target is detected in the image acquisition area by the detecting unit within the current period, determine that the image acquisition target is absent from the image acquisition area within the current period; and if at least one detection target is detected in the image acquisition area by the detecting unit within the current period, determine that the image acquisition target exists in the image acquisition area within the current period.

Optionally, as another embodiment, the device 500 further includes:
an image acquiring module, configured to: if the determining module 510 determines that the image acquisition target exists in the image acquisition area within the current period, acquire the image information of the image acquisition area within the current period.

Correspondingly, the sending module 520 is further configured to report the image information, acquired by the image acquiring module, of the image acquisition area within the current period to the multipoint control unit.

Optionally, as another embodiment, the image acquisition target includes a person; correspondingly, the determining module 510 is further configured to: if a person exists in the image acquisition area within the current period, determine personal information of the person.

Correspondingly, the sending module 520 is further configured to report the personal information, determined by the determining module 510, of the person to the multipoint control unit, so that the multipoint control unit determines an identity of the person according to the personal information of the person.

Optionally, as another embodiment, the personal information includes at least one of the following information: biometric feature information and identity information.

Optionally, as another embodiment, the determining module 510 is specifically configured to: obtain information stored in a sensing card corresponding to the person, where the information stored in the sensing card is used to identify the person; and determine the personal information of the person according to the information stored in the sensing card.

Optionally, as another embodiment, the personal information includes the identity information; correspondingly, the determining module 510 is specifically configured to: obtain biometric feature information of the person, and determine identity information of the person according to the biometric feature information and a personal information database.

Optionally, as another embodiment, the determining module 510 is further configured to: add a label to the personal information before the sending module 520 reports the personal information to the multipoint control unit, where a correspondence exists between the label and the acquired image information of the image acquisition area within the current period.

Correspondingly, the sending module 520 is specifically configured to send, to the multipoint control unit, the personal information to which the label is added by the determining module 510, so that the multipoint control unit matches the personal information with the image information according to the correspondence between the label and the acquired image information of the image acquisition area within the current period.

Optionally, as another embodiment, the image acquiring module is further configured to: if the determining module 510 determines that the image acquisition target is absent from the image acquisition area within the current period, skip acquiring the image information of the image acquisition area within the current period.

The device 500 for multipoint video communication according to this embodiment of the present invention may correspond to an execution body of the method for multipoint video communication according to the embodiments of the present invention, and the foregoing and other operations and/or functions of the modules in the device 500 for multipoint video communication aim to separately implement corresponding processes in the methods shown in FIG. 2 to FIG. 4. For brevity, details are not described herein again..

Therefore, according to the device for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

In addition, an embodiment of the present invention further provides a system 600 for multipoint video communication. An architecture of the system 600 for multipoint video communication is similar to that of the system for multipoint video communication shown in FIG. 1. The system 600 includes multiple endpoint devices 601 and a multipoint control unit 602, where each endpoint device 601 of the multiple endpoint devices 601 corresponds to at least one image acquisition area.

A first endpoint device 601 of the multiple endpoint devices 601 is configured to determine whether an image acquisition target exists in at least one image acquisition area corresponding to the first endpoint device 601 within a current period, and if the image acquisition target is absent from a first image acquisition area of the at least one image acquisition area within the current period, skip reporting image information of the first image acquisition area within the current period to the multipoint control unit 602.

Optionally, as another embodiment, the first endpoint device 601 is further configured to: if it is determined that the image acquisition target exists in the first image acquisition area within the current period, acquire the image information of the first image acquisition area within the current period, and report the acquired image information of the first image acquisition area within the current period to the multipoint control unit 602.

Correspondingly, the multipoint control unit 602 is configured to receive the image information sent by the first endpoint device 601, and send the image information, which is from the first endpoint device 601, to a second endpoint device 601.

The multipoint control unit 602 may directly send the image information to the second endpoint device after receiving the image information sent by the first endpoint device 601, or send the image information to the second endpoint device after processing the image information, which is not limited in this embodiment of the present invention. Optionally, the multipoint control unit 602 may actively send the image information, which is from the first endpoint device, to the second device; in this case, the second endpoint device may be another endpoint device except the first endpoint device of the multiple endpoint devices. Alternatively, the multipoint control unit 602 may receive a request message of the second endpoint device, where the request message is used to request the image information of the first endpoint device, and correspondingly, the multipoint control unit 602 sends the image information, which is from the first endpoint device, to the second endpoint device according to the request message; in this case, the second endpoint device may be any endpoint device of the multiple endpoint devices, that is, may be the first endpoint device or another device except the first endpoint device, which is not limited in this embodiment of the present invention.

Optionally, as another embodiment, the image acquisition target includes a person; correspondingly, the first endpoint device 601 is further configured to: if it is determined that a person exists in the first image acquisition area within the current period, determine personal information of the person, and send the personal information of the person to the multipoint control unit 602.

Correspondingly, the multipoint control unit 602 is further configured to receive the personal information sent by the first endpoint device 601, determine an identity of the person corresponding to the personal information, and send identity information of the person to the second endpoint device 601.

Specifically, if the personal information includes the identity information, the multipoint control unit 602 may directly determine the identity information of the person; if the personal information includes biometric feature information, the multipoint control unit 602 may input the biometric feature information to a personal information database, so as to determine identity information of a person corresponding to the biometric feature information. However, this embodiment of the present invention sets no limit thereto. The multipoint control unit may send image information and identity information that are corresponding to the first endpoint device to the second endpoint device, so that the second endpoint device may present both an image from the first endpoint device and identity information of a person in the image to a user, thereby improving user experience.

Optionally, as another embodiment, the personal information includes biometric feature information; correspondingly, the multipoint control unit 602 is specifically configured to determine the identity information of the person corresponding to the biometric feature information according to the received biometric feature information and a personal information database.

Therefore, according to the device for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

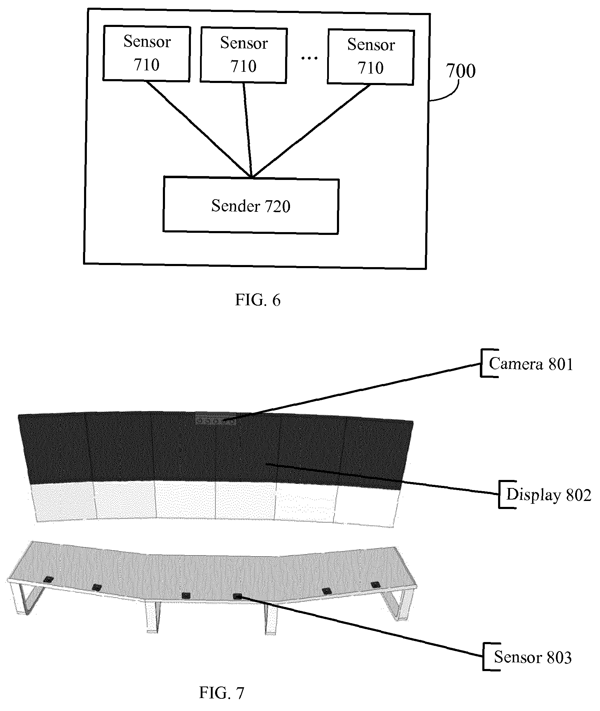

FIG. 6 is a device 700 for multipoint video communication according to another embodiment of the present invention. The device 700 includes N sensors 710 and a sender 720, where each sensor 710 of the N sensors 710 corresponds to one image acquisition area.

A first sensor 710 of the N sensors 710 is configured to determine whether an image acquisition target exists in a first image acquisition area corresponding to the first sensor 710 within a current period.

The sender 720 is configured to: if the first sensor 710 determines that the image acquisition target is absent from the first image acquisition area within the current period, skip reporting image information of the first image acquisition area within the current period to a multipoint control unit.

Optionally, as another embodiment, the device further includes M cameras, where 1 ≤ N ≤ M, and the first sensor 710 corresponds to at least one first camera of the M cameras.

The at least one first camera is configured to: if the first sensor 710 determines that the image acquisition target exists in the first image acquisition area within the current period, acquire the image information of the first image acquisition area within the current period.

The sender 720 is further configured to report the image information, acquired by the at least one first camera, of the first image acquisition area within the current period to the multipoint control unit.

Each camera of the M cameras corresponds to one sensor 710, and the camera and the sensor that are corresponding to each other correspond to a same image acquisition area. For example, the first sensor 710 and the at least one first camera correspond to the first image acquisition area.

Optionally, in this embodiment of the present invention, the at least one first camera may keep acquiring image information of the first image acquisition area, but the sender 720 sends image information, acquired by the at least one first camera, of the first image acquisition area within the current period to the multipoint control unit only when the first sensor 710 determines that an image acquisition target exists in the first image acquisition area within the current period. Optionally, as another embodiment, the at least one first camera may also acquire image information of the first image acquisition area within the current period only when the first sensor 710 determines that an image acquisition target exists in the first image acquisition area within the current period. Correspondingly, the at least one first camera is further configured to: if the first sensor 710 determines that the image acquisition target exists in the first image acquisition area within the current period, skip acquiring the image information of the first image acquisition area within the current period.

Optionally, as another embodiment, the image acquisition target includes a person; correspondingly, the device further includes a processor, configured to: if the first sensor 710 determines that a person exists in the first image acquisition area within the current period, determine personal information of the person.

The sender 720 is further configured to report the personal information, determined by the processor, of the person to the multipoint control unit, so that the multipoint control unit determines an identity of the person according to the personal information of the person.

In this case, a quantity of the at least one first camera may be one, that is, the first sensor 710 corresponds to one camera; however, this embodiment of the present invention is not limited thereto.

Optionally, as another embodiment, the first sensor 710 is specifically configured to: perform detection in the first image acquisition area within the current period, where a detection target of the detection includes at least one of the following: a biometric feature and a sensing card, where the sensing card stores identification information of an image acquisition target corresponding to the sensing card;
if the detection target is not detected in the first image acquisition area within the current period, determine that the image acquisition target is absent from the first image acquisition area within the current period; and
if the detection target is detected in the first image acquisition area within the current period, determine that the image acquisition target exists in the first image acquisition area within the current period.

Optionally, as one embodiment, if the detection target includes a sensing card, the processor may be specifically configured to: obtain information stored in a sensing card corresponding to the person, where the information stored in the sensing card is used to identify the person; and determine the personal information of the person according to the information stored in the sensing card.

Optionally, as another embodiment, if the detection target includes a biometric feature, the processor may be further configured to determine identity information of a person corresponding to the biometric feature according to a personal information database and the biometric feature detected in the first image acquisition area by the first sensor 710. If the processor 720 cannot determine an identity of the person corresponding to the biometric feature, for example, the device 700 does not include the personal information database, the sender 720 may be further configured to send biometric feature information obtained by the first sensor 710 to the multipoint control unit, and the multipoint control unit determines the identity information of the person according to the biometric feature information.

Optionally, as another embodiment, the processor may be further configured to add a label to at least one of the following objects, that is, the image information acquired by the at least one first camera and the personal information that is of the person and determined by the first sensor 710; the sender 720 is specifically configured to send, to the multipoint control unit, the image information and/or the personal information to which the label is added. In this case, the multipoint control unit may match the image information with the personal information according to the label, and differentiate the image information and the personal information that are corresponding to the first sensor 710 from image information and personal information that are corresponding to another sensor 710. However, this embodiment of the present invention is not limited thereto.

Therefore, according to the device for multipoint video communication in this embodiment of the present invention, it is determined whether an image acquisition target exists in an image acquisition area within a current period, and if the image acquisition target is absent from the image acquisition area within the current period, image information of the image acquisition area within the current period is not reported to a multipoint control unit, so that an image acquisition target always exists in an image corresponding to image information reported to the multipoint control unit. This avoids a waste of system resources caused by absence of an image acquisition target from an image corresponding to image information reported to the multipoint control unit, thereby saving the system resources, reducing load of the multipoint control unit, and improving overall performance of a system for multipoint video communication.

FIG. 7 shows an example of a device 800 for multipoint video communication according to an embodiment of the present invention. The device 800 includes multiple cameras 801, multiple displays 802, and multiple sensors 803. Reference may be made to the aforemetnioned embodiments for functions and specific implementations of the multiple cameras 801 and the multiple sensors 803, which are not described herein again for brevity. The multiple displays 802 are configured to display an image corresponding to image information delivered by a multipoint control unit, or present identity information corresponding to image information delivered by a multipoint control unit while displaying an image corresponding to the image information; however, this embodiment of the present invention is not limited thereto.

It should be understood that, the term "and/or" in this embodiment of the present invention describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a multipoint control unit, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for multipoint video communication, comprising:
determining whether an image acquisition target exists in an image acquisition area within a current period; and
if the image acquisition target is absent from the image acquisition area within the current period, skipping reporting image information of the image acquisition area within the current period to a multipoint control unit.

2. The method according to claim 1, wherein the determining whether an image acquisition target exists in an image acquisition area within a current period comprises:
performing detection in the image acquisition area within the current period, wherein a detection target of the detection comprises at least one of the following: a biometric feature and a sensing card wherein the sensing card stores identification information of an image acquisition target corresponding to the sensing card;
if the detection target is not detected in the image acquisition area within the current period, determining that the image acquisition target is absent from the image acquisition area within the current period; and
if the detection target is detected in the image acquisition area within the current period, determining that the image acquisition target exists in the image acquisition area within the current period.

3. The method according to claim 1 or 2, wherein the method further comprises:
if the image acquisition target exists in the image acquisition area within the current period, acquiring the image information of the image acquisition area within the current period; and
reporting the acquired image information of the image acquisition area within the current period to the multipoint control unit.

4. The method according to any one of claims 1 to 3, wherein the image acquisition target comprises a person, and the method further comprises:
if a person exists in the image acquisition area within the current period, determining personal information of the person; and
reporting the personal information of the person to the multipoint control unit, so that the multipoint control unit determines an identity of the person according to the personal information of the person.

5. The method according to claim 4, wherein the personal information comprises at least one of the following information: biometric feature information and identity information.

6. The method according to claim 4 or 5, wherein the determining personal information of the person comprises:
obtaining information stored in a sensing card corresponding to the person, wherein the information stored in the sensing card is used to identify the person; and
determining the personal information of the person according to the information stored in the sensing card.

7. The method according to claim 4 or 5, wherein the personal information comprises the identity information, and the determining personal information of the person comprises:
obtaining biometric feature information of the person; and
determining identity information of the person according to the biometric feature information and a personal information database.

8. The method according to any one of claims 4 to 7, wherein before the sending the personal information to the multipoint control unit, the method further comprises:
adding a label to the personal information, wherein a correspondence exists between the label and the acquired image information of the image acquisition area within the current period; and
the sending the personal information to the multipoint control unit comprises:
sending, to the multipoint control unit, the personal information to which the label is added, so that the multipoint control unit matches the personal information with the image information according to the correspondence between the label and the acquired image information of the image acquisition area within the current period.

9. The method according to any one of claims 1 to 8, wherein the method further comprises:
if the image acquisition target is absent from the image acquisition area within the current period, skipping acquiring the image information of the image acquisition area within the current period.

10. A device for multipoint video communication, comprising:
a determining module, configured to determine whether an image acquisition target exists in an image acquisition area within a current period; and
a sending module, configured to: if the determining module determines that the image acquisition target is absent from the image acquisition area within the current period, skip reporting image information of the image acquisition area within the current period to a multipoint control unit.

11. The device according to claim 10, wherein the determining module comprises:
a detecting unit, configured to perform detection in the image acquisition area within the current period, wherein a detection target of the detection comprises at least one of the following: a biometric feature and a sensing card, wherein the sensing card stores identification information of an image acquisition target corresponding to the sensing card; and
a determining unit, configured to: if no detection target is detected in the image acquisition area by the detecting unit within the current period, determine that the image acquisition target is absent from the image acquisition area within the current period; and if at least one detection target is detected in the image acquisition area by the detecting unit within the current period, determine that the image acquisition target exists in the image acquisition area within the current period.

12. The device according to claim 10 or 11, wherein the device further comprises:
an image acquiring module, configured to: if the determining module determines that the image acquisition target exists in the image acquisition area within the current period, acquire the image information of the image acquisition area within the current period; and
the sending module is specifically configured to report the image information, acquired by the image acquiring module, of the image acquisition area within the current period to the multipoint control unit.

13. The device according to any one of claims 10 to 12, wherein the image acquisition target comprises a person;
the determining module is further configured to: if a person exists in the image acquisition area within the current period, determine personal information of the person; and
the sending module is further configured to report the personal information, determined by the determining module, of the person to the multipoint control unit, so that the multipoint control unit determines an identity of the person according to the personal information of the person.

14. The device according to claim 13, wherein the personal information comprises at least one of the following information: biometric feature information and identity information.

15. The device according to claim 13 or 14, wherein the determining module is specifically configured to:
obtain information stored in a sensing card corresponding to the person, wherein the information stored in the sensing card is used to identify the person; and
determine the personal information of the person according to the information stored in the sensing card.

16. The device according to claim 13 or 14, wherein the personal information comprises the identity information, and the determining module is specifically configured to: obtain biometric feature information of the person, and determine identity information of the person according to the biometric feature information and a personal information database.

17. The method according to any one of claims 13 to 16, wherein the processing module is further configured to: add a label to the personal information before the sending module reports the personal information to the multipoint control unit, wherein a correspondence exists between the label and the acquired image information of the image acquisition area within the current period; and
the sending module is specifically configured to send, to the multipoint control unit, the personal information to which the label is added by the processing module, so that the multipoint control unit matches the personal information with the image information according to the correspondence between the label and the acquired image information of the image acquisition area within the current period.

18. The device according to claim 12, wherein the image acquiring module is further configured to: if the determining module determines that the image acquisition target is absent from the image acquisition area within the current period, skip acquiring the image information of the image acquisition area within the current period.

19. A system for multipoint video communication, comprising multiple endpoint devices and a multipoint control unit, wherein: each endpoint device of the multiple endpoint devices corresponds to at least one image acquisition area; and
a first endpoint device of the multiple endpoint devices is configured to determine whether an image acquisition target exists in at least one image acquisition area corresponding to the first endpoint device within a current period, and if the image acquisition target is absent from a first image acquisition area of the at least one image acquisition area within the current period, skip reporting image information of the first image acquisition area within the current period to the multipoint control unit.

20. The system according to claim 19, wherein the first endpoint device is further configured to: if it is determined that the image acquisition target exists in the first image acquisition area within the current period, acquire the image information of the first image acquisition area within the current period, and report the acquired image information of the first image acquisition area within the current period to the multipoint control unit; and
the multipoint control unit is configured to receive the image information sent by the first endpoint device, and send the image information to a second endpoint device.

21. The system according to claim 20, wherein the image acquisition target comprises a person; the first endpoint device is further configured to: if it is determined that a person exists in the first image acquisition area within the current period, determine personal information of the person, and send the personal information of the person to the multipoint control unit; and
the multipoint control unit is further configured to receive the personal information sent by the first endpoint device, determine identity information of the person corresponding to the personal information, and send the identity information of the person to the second endpoint device.

22. The system according to claim 21, wherein the personal information comprises biometric feature information; and
the multipoint control unit is specifically configured to determine the identity information of the person corresponding to the biometric feature information according to the received biometric feature information and a personal information database.

23. A device for multipoint video communication, comprising N sensors and a sender, wherein each sensor of the N sensors corresponds to one image acquisition area;
a first sensor of the N sensors is configured to determine whether an image acquisition target exists in a first image acquisition area corresponding to the first sensor within a current period; and
the sender is configured to: if the first sensor determines that the image acquisition target is absent from the first image acquisition area within the current period, skip reporting image information of the first image acquisition area within the current period to a multipoint control unit.

24. The device according to claim 23, wherein the device further comprises M cameras, wherein 1 ≤ N ≤ M, and the first sensor corresponds to at least one first camera of the M cameras, wherein:
the at least one first camera is configured to: if the first sensor determines that the image acquisition target exists in the first image acquisition area within the current period, acquire the image information of the first image acquisition area within the current period; and
the sender is further configured to report the image information, acquired by the at least one first camera, of the first image acquisition area within the current period to the multipoint control unit.

25. The device according to claim 23 or 24, wherein the image acquisition target comprises a person, and the device further comprises:
a processor, configured to: if the first sensor determines that a person exists in the first image acquisition area within the current period, determine personal information of the person; and
the sender is further configured to report the personal information, determined by the processor, of the person to the multipoint control unit, so that the multipoint control unit determines an identity of the person according to the personal information of the person.

26. The device according to claim 24, wherein the at least one first camera is further configured to: if the first sensor determines that the image acquisition target exists in the first image acquisition area within the current period, skip acquiring the image information of the first image acquisition area within the current period.
